# EUROPEAN PATENT APPLICATION

(11) **EP 0 724 828 A2**
(43) Date of publication of application: **07.08.1996**
(21) Application number: 96101187.1
(22) Date of filing: 29.01.1996
(51) Int. Cl.: A01K 1/03

(54) **Container for animal breeding**

(30) Priority: 31.01.1995 IT MI950160
(71) Applicant: TECNIPLAST GAZZADA S.a.r.l., I-21020 Buguggiate, Varese (IT)
(72) Inventor: Campiotti, Alfredo, I-21046 Malnate, (Varese) (IT)
(74) Representative: Gervasi, Gemma, Dr.

(57) **Abstract**

The following description refers to a container for animal breeding, provided with a seal valve (3) connecting the same to a nozzle (4) (integral with the shelves whereon several containers (2) are placed) fit for blowing air at slightly above atmospheric pressure thereinto: said seal valve (3) maintains the container (2) under slight overpressure.

The container (2) is also provided with a hole closed by sealing means (5) actuated by flexible means (38), allowing the insertion of the end portion of a drinking-trough (6).

## Description

### Field of the invention

The present invention refers to a container for animal breeding, provided with a seal valve connecting the same to a nozzle fit for blowing air at slightly above atmospheric pressure thereinto: said seal valve maintains the container under slight overpressure.
The container is also provided with a hole closed by sealing means actuated by flexible means, allowing the insertion of the end portion of a drinking-trough.

The container of the invention may also be provided with:
- an additional seal valve, fixed to a hole pierced through the container lid and connected with an additional nozzle whereto a pressure slightly below the atmospheric is applied;
- a body surrounding over the drinking-trough and sliding along it, which maintains the inside of the container under overpressure as long as said sealing/means is not completely closed.

### Prior art

In view of the high and rising cost of the small animals (guinea pigs, mice, etc.) widely employed in research labs, the problem of their living in an as comfortable and aseptic environment as possible has become topical and increasingly felt.

In fact, said animals (which are often the result of time-consuming and costly researches, selections and/or genetic alterations) are more and more "sophisticated", very often have delicate health and poor resistance to diseases caused by microbes, bacteria and/or viruses.

The result of a research work, often time-consuming and costly, might be affected and sometimes jeopardized by the animals' state of health, which might alter the animals' reaction and/or resistance to the administered substances and/or induced infections, if any, and by infections caused by the external environment or transmitted by animals (possibly infected for another reseach) housed in other containers of the animal breeding department, and/or by the personnel employed.

Furthermore, the diseases induced in test animals might infect the personnel in charge of the animal breeding department.

To safeguard the validity of the researches in progress and the state of health of the test animals, thus avoiding the often considerable economic damage derived from an excessive death rate, the animals should conveniently live in an as comfortable environment as possible and above all in separate containers, which would prevent the spreading of diseases among the various (groups of) animals and/or between animals and personnel in charge of the animal breeding department.

To prevent any possible spreading of diseases, more or less complex operating procedures and techniques are adopted to make the breeding environment sterile, e.g. separation (by tightly sealed partitions, air laminar flows and/or other means already known) of the breeding areas housing the single animal lots to be kept separated: the degree of "sterility" obtained depends on the type of techniques and procedures adopted. In any case the operating costs of the breeding department rise.

A way of isolating test animals from each other and from the personnel and, at the same time, of reducing operating costs is to enclose them, either alone or in small homogeneous groups, in containers, usually small in size. Inside said containers the most convenient microclimate for the life of said animals is realized, taking into account several factors, such as for example the physical and genetic characteristics, the research in progress or the research the animals are intended for, and so on. Great care is taken to provide the container inside with a change of air adequate for maintaining low levels of ammonia and carbon dioxide concentrations, which substances are harmful to the animals good health.

Containers whose inside is maintained at slightly above atmospheric pressure to isolate the same from the external environment are known and commercially available. In fact, a slight overpressure prevents external air, a potential vehicle of infections, from penetrating into the container and causing contaminations; it also facilitates the release of foul air from the container, thus improving the change of air inside it.

Said containers are provided with means connecting the same with a pipe (or equivalent means) conveying air (generally filtered and decontaminated) at the desired pressure: said connecting means will maintain - at least for a short time - the container isolated and protected from the external environment, should said container be disconnected from the pipe and moved for any reason.

The containers are generally placed on shelves (either open or closed by doors or the like) attached to a framework, which is the stationary component of the breeding department. Said support framework is provided with a system that supplies the single containers with air and, preferably but not necessarily, with the water to be conveyed to the drinking-troughs, if any.

Some inconveniences and limitations are inherent in all connecting means already known.

In a container of known type, the air pipe penetrates through a hole in the container wall provided with a seal ring which adheres to the pipe when inserted into the container. When the pipe is disconnected from the container, said seal ring does not close the hole and, therefore, does not isolate the container inside from the external environment.

In a further type of container, the hole in the container wall is closed by a cross-cut baffle in rubber (or similar material). Said baffle - especially when new or almost new - satisfactorily isolates the container inside when the pipe is not inserted in the hole; conversely, when the pipe is inserted in the hole, said baffle, which does not adhere to the pipe, cannot isolate the container from the external environment.

In a still further type of container, a substantially cylindrical body, which sticks out in the container, is fixed to the hole on the container wall. The pipe is positioned and pressed against said hole at the same height of the cylindrical body: the air passes from the pipe into the cylindrical body, wherefrom it reaches the container through a circular series of holes pierced in the cylinder end.

A drinking-trough is fixed to the cylinder end. Said trough is provided with an element sticking out inside the cylinder and is coupled by pressure with a corresponding element located inside the pipe. The coupling of the two trough elements locks the container to the pipe.

In another version of said container, there is no drinking-trough element located inside the pipe; the container is locked to the pipe by an element located inside the cylinder - fixed to the container - which clutches flexible means within the pipe.

In both versions, the means for container and pipe coupling are complex and costly to implement, do not adequately isolate the container from the external environment when the container is detached from the pipe and, being not movable, do not allow the stacking up of containers for storage.

It is an object of the present invention to provide a container for animal breeding equipped with simple and economical coupling means allowing the coupling of same with an air nozzle and being free from the inconveniences involved by the coupling means of the prior art.

### Summary

It is an object of the present invention to provide a container for animal breeding department suitable for insertion in a support framework and including at least the following components in combination with one another:
- a substantially discoid seal valve applied to a first hole pierced in the container wall, actuated by a nozzle (integral with the support framework) fit for blowing air at slightly above atmospheric pressure into said container, and
- sealing means fitted into a second hole pierced in the container wall, which is opened by the end portion of a drinking-trough integral with the support framework.

Seal valve and sealing means project only slightly in respect of the container wall, which allows the stacking up of a plurality of containers according to the invention.

### Description of the drawings

The present invention will now be described in greater detail, with reference to embodiments shown by way of illustration and not of limitation in the drawings, in which:
FIG. 1 is a fragmentary cross-sectional view of wall of container housing seal valve, opened by air nozzle, and drinking-trough;
FIG. 2a is a cross-sectional view of seal valve opened by nozzle;
FIG. 2b is a cross-sectional view of seal valve in a closed position;
FIG. 3 is a cross-sectional view of sealing means opened by the end portion of drinking-trough;
FIG. 4 is a front view of sealing means of fig. 3 in a closed position;
FIG. 5 shows a further embodiment of the invention.

### Detailed description of the invention

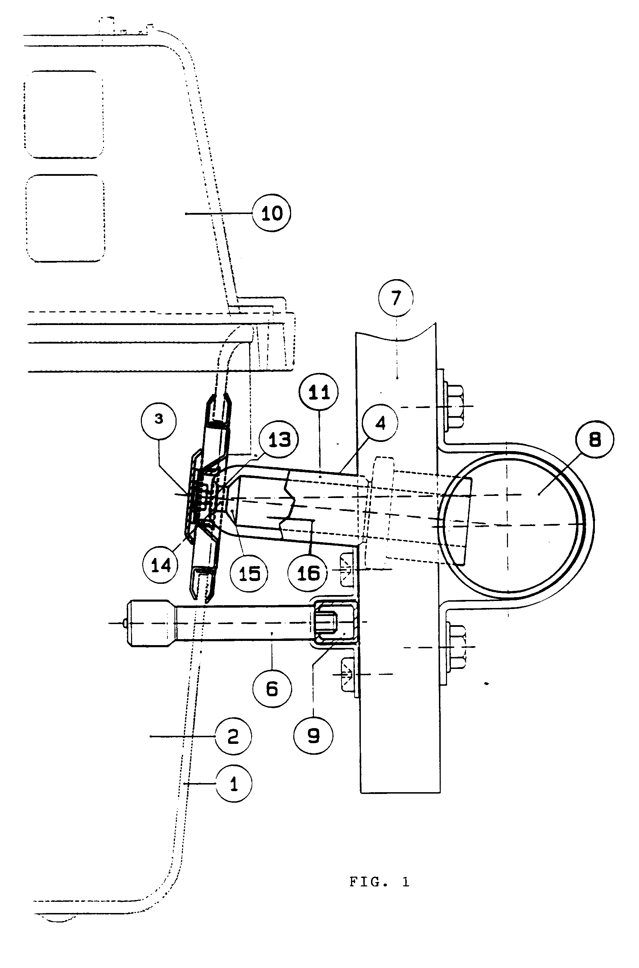

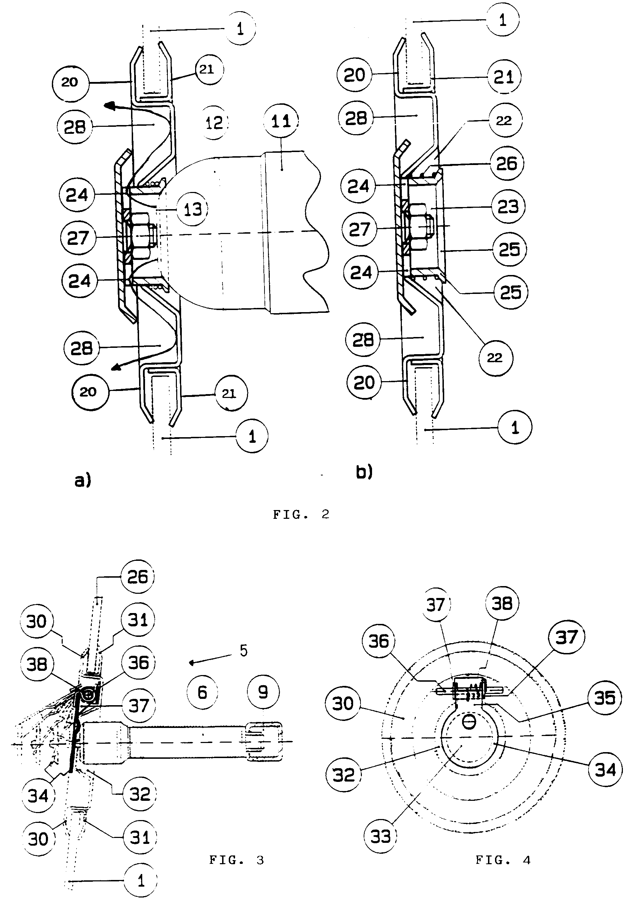

Fig. 1 is a fragmentary cross-sectional view of wall 1 of container 2 housing discoid seal valve 3 (shown in more detail in figs. 2a and 2b), opened by nozzle 4 fit for blowing air at slightly above atmospheric pressure into said container 2, and drinking-trough 6 (preferably but not necessarily being an automatic drinking-trough), whose end portion opens (as shown in fig. 3) sealing means 5 fitted into a further hole pierced in wall 1 of container 2. ozzle 4 is connected with pipe 8 belonging to the air conveying system and drinking-trough 6 is connected with duct 9 belonging to the water supply system: pipe 8 and duct 9 are fixed to upright 7 of the support framework of the containers of the invention.

The water and air conveying systems, the support framework, drinking-trough 6 and lid 10 closing the top of container 2 will not be further illustrated in the present description being already known (or easily implemented by experts in the art) and, in any case, departing from the scope of the present invention.

Nozzle 4 (refer to fig. 1 for a fragmentary cross-sectional view and to fig. 2a for a more detailed representation) consists of cylindrical body 11 with an end connected with pipe 8 and with the opposite end closed by rounded surface 12 actuating seal valve 3: the centre of surface 12 is pierced with hole 13 which, in the embodiment illustrated in fig.1, is truncated-cone shaped, and is jointed - by cylindrical hole 14 and truncated cone portion 15 - to cavity 16 of cylindical body 11, which is also connected with pipe 8.

Nozzle 4 and pipe 8 are fixed to upright 7 in such a way as to make the symmetry axis of nozzle 4 perpendicular to wall 1 of container 2 housing seal valve 3. An optimal coupling between nozzle 4 and seal valve 3 is thus obtained.

In fig. 1, nozzle 4 and drinking-trough 6 are off-centre. However, without departing from the scope of the invention, nozzle 4 and drinking-trough 6 may be positioned in stacked relation.

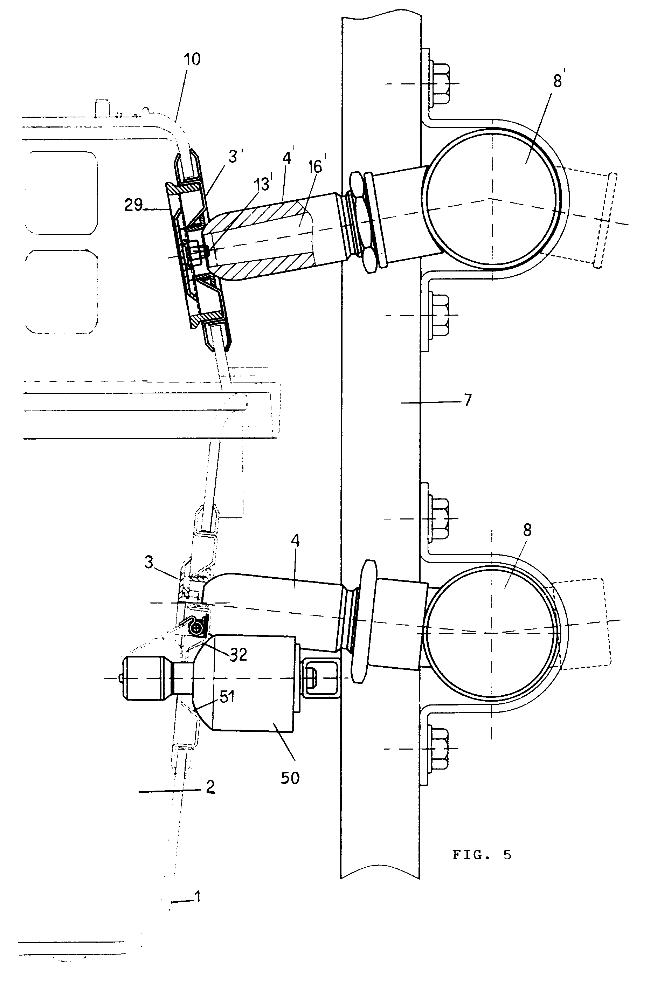

Still without departing from the scope of the invention, air circulation in container 2 may be improved by fixing (as illustrated in fig. 5) additional seal valve 3' to a hole pierced in lid 10 and by applying a pressure slightly below the atmospheric to corresponding nozzle 4', perpendicular to the wall of lid 10, to obtain an ideal coupling with seal valve 3', and connected with additional pipe 8' which is fixed to upright 7 of the support framework and belongs to an air suction system. The air sucked from containers 2 inserted in the support framework is filtered and sterilized before being let in the environment again, with consequent abatement of the environmental contamination and risks for the personnel.

Additional seal valve 3' and additional nozzle 4' are substantially identical with seal valve 3 of fig. 2 and, respectively, with nozzle 4 described above. Without departing from the scope of the invention, hole 13 pierced in the centre of rounded surface 12 of a nozzle (4, 4') may be cylindrical in shape and be directly jointed to a truncated cone inner cavity 16' (fig. 5).

Furthermore, the projection of seal valve 3 and plug 5 in respect of wall 1 of container 2 whereto they are fixed, is so little that containers 2, once lids 10 are removed, may be stacked up.

Fig. 2a is a cross-sectional view of seal valve 3 opened by nozzle 4;
Fig. 2b is a cross-sectional view of seal valve 3 in a closed position.

Seal valve 3 includes the following components, in combination with one another:
- a body 20, substantially discoid in shape, which is inserted in the hole pierced on purpose in wall 1 of container 2, whereto it is fixed by annular flange 21: in the central part of body 20 there is a truncated cone portion 22 with a hole at its centre;
- a hollow body 23, substantially cylindrical in shape, tightly inserted in the hole at the centre of truncated cone portion 22 of body 20: the end of the cavity of body 23 houses a circular series of radial slits 24 from the inner cavity of body 23 to its external side surface; truncated cone portion 25 is located at the opposite end of body 23;
- a spring 26, preferably a coil spring, applied to the external surface of body 23 between truncated cone portion 25 of body 23 and the end of truncated cone portion 22 of body 20;
- a substantially flat element 27, discoid in shape, fixed to the end of body 23 facing the inside of container 2, and having a diameter not larger than that of body 20 and not smaller than that of hollow body 23.

The components of seal valve 3 (annular body 20, annular flange 21, hollow body 23, and flat element 27) are of metal or of other materials (e.g. plastic) having mechanical properties adequate for withstanding the stresses exerted on each of them during seal valve 3 operation.

When container 2 is inserted in the support framework (fig. 2a), rounded surface 12 of nozzle 4, acting on truncated cone portion 25 of hollow body 23, backs hollow body 23, compresses spring 26 and uncovers the side surface area of said hollow body housing radial slits 24: the air going out from hole 13 at the end of nozzle 4 penetrates into container 2 through hollow body 23 and radial slits 24.

In the preferred embodiment illustrated in the figures, the external edge of flat element 27 is slightly bent to deflect the air flows leaving radial slits 24 towards annular portion 28 of body 20. The air leaving hole 13 of nozzle 4 follows the way schematically indicated by arrows in fig. 2a, which allows a uniform air spreading inside container 2 and saves the test animals in the container from being hit by direct air jets, which are potentially noxious to their health and always irritating.

When container 2 is not inserted in the support framework (fig. 2b), spring 26 is released and hollow body 23 is restored to normal position. Flat element 27 is pressed against truncated cone portion 22 of body 20 by the residual stress of spring 26. The pressure slightly above the atmospheric previously produced in container 2 is thus maintained.

Fig. 3 is a cross-sectional view of sealing means 5 opened by the end portion of drinking-trough 6. The figure shows sealing means 5 in a closed position and drinking-trough 6 when touching sealing means 5 (bold lines) and the successive positions of sealing means 5 and of the end portion of drinking-trough 6 during the insertion of same into container 2 (dashed lines).

Sealing means 5 includes the following components, in combination with one another:
- a body 30, substantially discoid in shape, inserted in the hole pierced in wall 1 of container 2 (fixed thereto by annular flange 31) to allow the insertion of drinking-trough 6: in the central part of body 30 there is truncated cone portion 32 pierced at its centre with hole 33, indicated with a dashed line in fig. 4;
- a metal or plastic osculant disc 34 with appendix 35, preferably with curled end, capable of rotating around axis 36 supported by at least a couple of bent and pierced limbs 37, integral with discoid body 30;
- a spring 38, preferably a coil spring wound around axis 36, pressing osculant disc 34 against the truncated cone portion of discoid body 30 to close hole 33.

In the embodiment illustrated in fig. 3 and fig. 4, hole 33 is slightly larger in diameter than the end of drinking-trough 6, but has no sealing means. When container 2 is inserted in the support framework (fig. 2a), a small quantity of air entering container 2 through seal valve 3 may escape at the drinking-trough sides, which results in an improvement in ventilation inside the container. When container 2 is not inserted in the support framework (fig. 2b), spring 38 presses osculant disc 34 against the truncated cone portion of discoid body 30, closes hole 33 of discoid body 30 and maintains, with seal valve 3, the slight overpressure - in respect of atmospheric pressure - previously produced.

Fig. 4 is a front view of sealing means 5 in a closed position. It shows discoid body 30 with hole 33 (dashed line), osculant disc 34 with appendix 35 rotating around axis 36 supported by limbs 37, integral with discoid body 30, and spring 38, preferably a coil spring wound around axis 36.

Fig. 5 illustrates a further embodiment of the invention. It shows:
- an additional seal valve 3', fixed to a hole pierced in lid 10 of container 2 and tightly connected with additional nozzle 4', whose inner cavity is connected with additional pipe 8' which is fixed to upright 7 of the support framework and belongs to an air suction system; additional seal valve 3' is preferably inclusive of coarse filtering means 29 preventing foreign bodies from entering additional pipe 8';
- a body 50 surrounding drinking-trough 6 and sliding along it by the action of a spring (or equivalent flexible means), not shown in fig. 5 being inside body 50 and anyway already known. Said body 50 maintains the inside of container 2 under overpressure as long as sealing means 5 is not completely closed.

Body 50 is preferably cylindrical in shape and is closed by a rounded surface 51, which tightly clutches truncated cone portion 32 of sealing means (fig. 3), thus isolating the inside of container 2 from the external environment: this is a big advantage especially when container 2 is moved from the support framework.

In fact, during said operation, nozzle 4, which blows air into container 2 to maintain the container inside at a pressure slightly above the atmospheric, is disconnected (or may be disconnected) from corresponding seal valve 3 (which closes almost immediately) before drinking-trough 6 (usually longer than nozzle 4) is completely out of hole 33 (fig. 3), thus allowing sealing means 5 to close completely to isolate the inside of container 2 from the external environment. It follows that, during the time that elapses (or may elapse) from the closure of the seal valve 3 to that of the sealing means 5, unfiltered air enters (or may enter) into container 2, which may jeopardize the microbiological integrity of the environment inside the container.

The container for animal breeding forming the object of the invention may be modified and perfected by experts in the art, as suggested by their experience and by the new developments of the technique without departing from the scope of the present invention.

## Claims

1. Container for animal breeding suitable for insertion in a support framework and inclusive at least of the following components in combination with one another:
- a discoid seal valve (3) applied to a first hole pierced in wall (1) of said container (2), actuated by nozzle (4), integral with the support framework, fit for blowing air at slightly above atmospheric pressure into container (2), and
- sealing means (5) fitted into a second hole pierced in wall (1) of said container (2), which is opened by the end portion of drinking-trough (6) integral with said support framework; said seal valve (3) and said sealing means (5) projecting only slightly in respect of wall (1) of said container (2).

2. The container according to claim 1, wherein said nozzle (4) is perpendicular to wall (1) of said container (2) housing said seal valve (3).

3. The container according to claim 1, wherein said nozzle (4) and said drinking-trough (6) may be positioned in stacked relation.

4. The container according to claim 1, wherein said nozzle (4) and said drinking-trough (6) are off-centre.

5. The container according to claim 1, wherein said container is stackable.

6. The container according to claim 1, wherein said nozzle (4) consists of cylindrical body (11), having, at one end, rounded surface (12) actuating said seal valve (3), the centre of said rounded surface (12) being pierced with a hole (13) jointed to a cavity (16, 16') of said cylindrical body (11) connected with means (8) supplying said air at slightly above atmospheric pressure.

7. The container according to claim 1, wherein said seal valve (3) includes the following components in combination with one another:
- a first discoid body (20), which is inserted in said first hole pierced in said wall (1) of said container (2), said first discoid body (20) being fixed to said wall (1) by a first annular flange (21) and having, in its centre, a truncated cone portion (22) with a hole at its centre;
- a hollow body (23), substantially cylindrical in shape, tightly inserted in said hole pierced in said truncated cone portion (22) of said first discoid body (20), the end of the cavity of said hollow body (23) housing a circular series of radial slits (24) from said inner cavity of said hollow body (23) to its external side surface, the opposite end of said hollow body (23) exhibiting truncated cone portion (25);
- a spring 26 applied to the external surface of said hollow body (23) between said truncated cone portion (25) of said hollow body (23) and said truncated cone portion (22) of said first discoid body (20);
- a flat discoid element (27) fixed to the wall of said hollow body (23) facing the inside of said container (2), said flat element (27) having a diameter not larger than that of said first discoid body (20) and not smaller than that of said hollow body (23).

8. The container according to claim 7, wherein said spring (26) is a coil spring.

9. The container according to claim 7, wherein, when said container (2) is not inserted in said support framework, said flat element (27) is pressed against said truncated cone portion (22) of said first discoid body (20) by the residual stress of said spring (26).

10. The container according to claim 7, wherein said first discoid body (20), said hollow body (23), said flat element (27) and said first annular flange (21) are in metal.

11. The container according to claim 7, wherein said first discoid body (20), said hollow body (23), said flat element (27) and said first annular flange (21) are in plastic material.

12. The container according to claim 1, wherein said sealing means (5) includes the following components in combination with one another:
- a second discoid body (30) inserted in said second hole pierced in said wall (1) of said container (2), said second discoid body (30) being fixed thereto by a second annular flange (31), and having in its central part a truncated-cone portion (32) pierced at its centre with hole (33);
- an osculant disc (34) having an appendix (35) capable of rotating around an axis (36) supported by at least a couple of bent and pierced limbs (37), integral with said second discoid body (30);
- a spring (38) capable of pressing said osculant disc (34) against said truncated cone portion (32) of said second discoid body (30) to close said hole (33).

13. The container according to claim 12, wherein said osculant disc (34) is in metal.

14. The container according to claim 12, wherein said osculant disc (34) is in plastic material.

15. The container according to claim 12, wherein said spring (38) is a coil spring and is wound round said axis (36).

16. The container according to claim 1, wherein said container includes an additional seal valve (3') fixed to a hole pierced in lid (10) of said container (2), actuated by an additional nozzle (4'), integral with said support framework, whereto a pressure slightly below the atmospheric is applied.

17. The container according to claim 16, wherein said additional nozzle (4') is perpendicular to the wall of said lid (10) whereto said additional seal valve (3') is applied.

18. The container according to claim 16, wherein said additional seal valve (3') is inclusive of coarse filtering means (29) of said sucked air.

19. The container according to claim 12, wherein said container is inclusive of a body (50), substantially cylindrical in shape, surrounding said drinking-trough (6) and closed by a rounded surface (51), said body (50) being capable of sliding along said drinking-trough (6) by the action of flexible means tightly to clutch said rounded surface (51) to said truncated cone portion (32) belonging to said sealing means (5).
